Europäisches Patentamt

European Patent Office

Office européen des brevets

(11) Publication number: **0 013 105**
A1

# EUROPEAN PATENT APPLICATION

(21) Application number: 79302898.6

(22) Date of filing: 14.12.79

(51) Int. Cl.³: **F 16 J 15/52**

(30) Priority: 20.12.78 JP 175216/78 U
20.03.79 JP 32492 79

(43) Date of publication of application:
09.07.80 Bulletin 80/14

(84) Designated Contracting States:
DE FR GB IT

(71) Applicant: TOKICO LTD.
6-3, Fujimi, 1-Chome Kawasaki-Ku
Kawasaki-shi Kanagawa-ken(JP)

(72) Inventor: Oshima, Harumi
4309-2-204, Akua-cho Seya-ku
Yokohama-shi Kanagawa-ken(JP)

(72) Inventor: Karasudani, Yasuo
4309, Akuwa-cho Seya-Ku
Yokohama-shi Kanagawa-Ken(JP)

(74) Representative: Jones, Colin et al,
W.P. THOMPSON & CO. Coopers Building Church Street
Liverpool L1 3AB(GB)

(54) A dust cover for sealing a space between two members.

(57) A dust cover (5,7) formed of a flexible material for sealing a space between a body member (1) and a shaft (2) which is movably received in the body member the dust cover having one end portion (5a, 7a) secured to the shaft and the other end portion (5b, 7b) secured to the body member, the two end portions being interconnected by a thin intermediate portion.

In order to prevent the intermediate portion from being damaged during assembly and in order to provide a more effective seal the other end portion (5b, 7b) of the dust cover secured to the body member sealingly engages with the shaft.

*Fig. 2*

EP 0 013 105 A1

0013105

1.

## DESCRIPTION

"A DUST COVER FOR SEALING A SPACE BETWEEN TWO MEMBERS"

The invention relates to a dust cover for sealing a space between two members and more particularly for sealing a space between a body member and a shaft which is received fittingly in the body member so as to prevent the ingress of dust, water or the like into the space.

A known dust cover is formed of a flexible material such as rubber or the like, with one end portion thereof sealingly secured to a shaft at a position where the shaft projects out of the body member, and the other end portion thereof being secured to the body member. The end portions are connected by a thin, intermediate portion which accommodates the relative movement between the shaft and the body member.

However, in dust covers of this type, the sealing function is solely attained by the thin intermediate portion thus the sealing function will be decreased when the thin intermediate portion is aged or impaired. Further, in mounting this type of dust cover and in fitting the shaft into the bore the thin intermediate portion, particularly, the portion adjacent to the end portion secured to the body member will sometimes displace radially inwardly to contact with the circumference of the shaft and, thus, be carried into a bore of the body member and become trapped between the shaft and the body member. Accordingly the intermediate portion may be damaged.

In accordance with the present invention there is provided a dust cover formed of a flexible material for sealing a space between a body member and a shaft which is received fittingly in the body member, one end portion of said dust cover being sealingly secured to a portion of the shaft projecting out of the body member, and the other end portion of said dust cover being secured to the body member characterised in that the inner circumference of said other end portion of the dust cover which is secured to the body member also sealingly engages with the shaft.

An advantage offered by the invention is that the sealingness can reliably be maintained even if the thin flexible intermediate portion of the dust cover would be damaged.

The present invention will now be described by way of example only with reference to the accompanying drawings which illustrate two embodiments of the invention as applied to a hand brake mechanism in a disc brake, in which:-

Fig. 1 is a longitudinal sectional view of the essential portion of a hand brake mechanism of a disc brake;

Fig. 2 is an enlarged partial view of the essential portion of Fig. 1;

Fig. 3 is a view similar to Fig. 1, but showing a second embodiment of the invention, and

Fig. 4 is an enlarged partial view of the essential portion of Fig. 3.

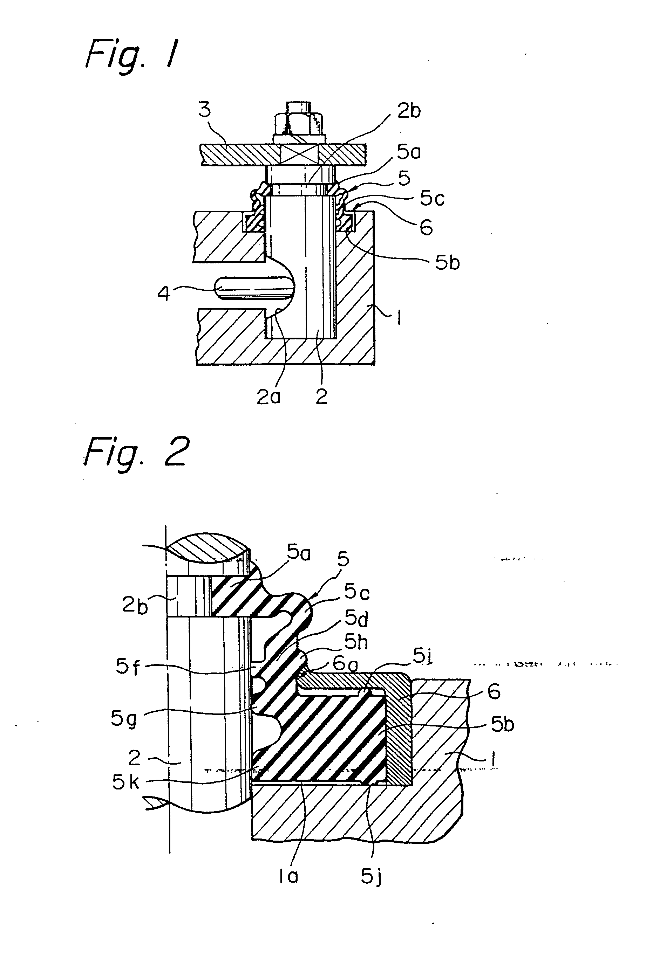

In Fig. 1, designated at 1 is a main body or a body member of a disc brake. The body member 1 receives rotatably therein a shaft 2, and a lever 3 connected to a hand brake lever (not shown) is secured to an end of the shaft 2 projecting out of the body member 1. A recess 2a constituting an eccentric cam is formed in the shaft 2, and one end of a rod 4 is inserted into the recess 2a to engage with the shaft 2. When the shaft 2 is rotated by actuating the hand brake lever, the rod 4 moves leftward as viewed in Fig. 1 and presses a friction pad (not shown) against one surface of a rotatable disc (not shown).

A dust cover 5 formed of a flexible material such as rubber or the like is provided between the shaft 2 and the body member 1. As shown in Fig. 2, one end (the upper end in the drawings) portion 5a is fitted on a reduced diameter portion 2b of the shaft 2, and the other end portion 5b of the dust cover 5 is received in a recess of counterbored portion 1a of the body member 1 and is retained by a retaining ring 6.

An intermediate portion 5c connects the opposite end portions 5a and 5b, and the thickness of the portion 5c is determined such that the portion 5c is sufficiently flexible to accommodate the relative movement between the shaft 2 and the body member 1.

In accordance with the invention the end portion 5b engages with the shaft portion 5d. A plurality of annular projections 5f, 5g and 5k are formed on the inner circumference of the end portion 5b, and are spaced from one another in the axial direction or in the direction of the axis of the shaft 2 and in accordance with a preferred embodiment of the invention engage sealingly with the shaft 2. The thickness of the cylindrical portion 5d is sufficiently large so that the portion 5d will not deform independently of the main portion of the end portion 5b.

The retaining ring 6 has a generally L-shaped configuration and covers the outer surface of the end portion 5b of the dust cover 5. The inner circumferential edge 6a of the retaining ring 6 engages the outer circumference of the cylindrical portion 5d, thus, the annular projections 5f and 5g which are provided on the inner circumference of the cylindrical portion 5d, in the embodiment reliably engage with the shaft 2. An annular projection 5h is formed on the outer circumference of the cylindrical portion 5d of the dust cover 5 to engage with the inner circumference

4.

6a of the retaining ring 6. Annular projections 5i and 5i are formed between the retaining ring 6 and the end portion 5b and between the end portion 5b and the body member 1.

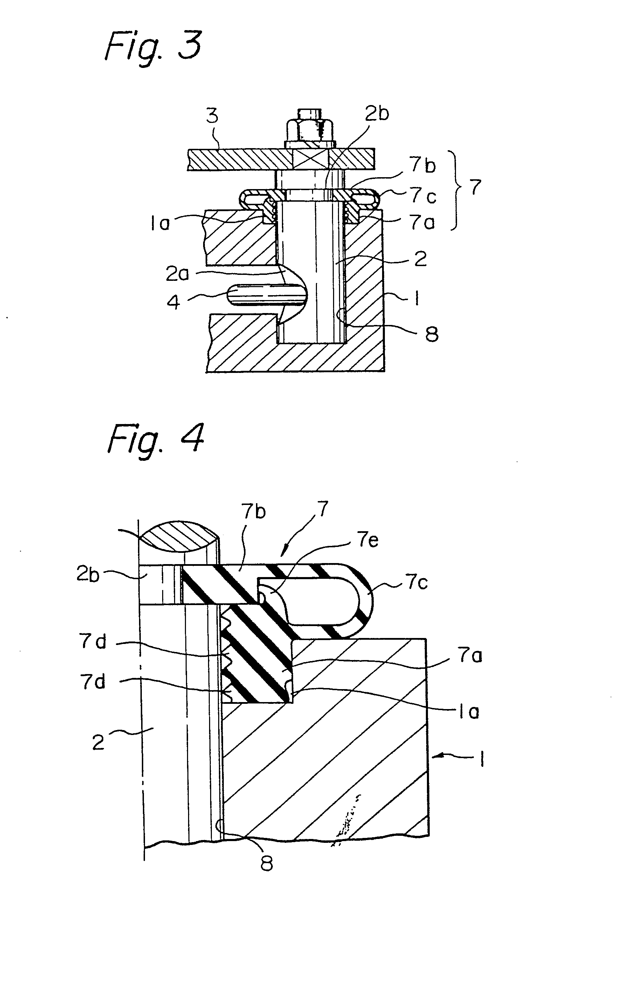

Figs. 3 and 4 show another embodiment of the present invention. In a similar manner to the first embodiment, a shaft 2 of a vehicle hand brake mechanism is rotatably received in a bore 8 formed in a body member 1 of a vehicle brake housing. When a hand brake lever (not shown) is actuated, a lever 3 rigidly connected to the shaft 2 is actuated, and the rotation of the shaft 2 is transmitted to a friction pad (not shown) through a rod 4 engaging with an eccentric cam 2a formed in the shaft 2.

According to the invention, a dust cover 7 is provided between the shaft 2 and the body member 1. One of end portions 7b of the dust cover 7 is fitted sealingly around a reduced diameter portion 2b of the shaft 2 at the position projecting out of the bore 8 of the body member 1, and the other end portion 7a of the dust cover 7 is tightly fitted in a recess or counterbore portion 1a which is formed in the open end of the bore 8. The opposite end portions 7a and 7b are connected by a thin, flexible portion 7c which has a sufficient flexibility to accommodate the movement of the shaft 2 with respect to the body member 1. On the inner circumference of the end portion 7a, there are formed a plurality of axially spaced annular projections 7d for engaging sealingly with the shaft 2.

The reduced diameter portion 2b in the shaft 2 is located adjacent to the recess 1a in the body member 1, so that the end portion 7a of the dust cover 7, in the assembled condition shown in Fig. 4, contacts lightly with the end portion 7b. Therefore, the end portion 7a

5.

can be retained in its position by the end portion 7b
which is fitted in and is retained in its position by
an annular groove defined by the reduced diameter
portion 2b. A lip portion 7e formed on the end portion
7a sealingly contacts with the end portion 7b. Thus,
the sealingness between the shaft 2 and the body member
1 can reliably be maintained even if the thin thickness
portion 7c of the dust cover 7 has accidentally been
oken.

In the embodiments, the present invention has been
lied on hand brake mechanisms of a vehicle braking
-stem, but the invention may be applied to any other
echanisms provided that a shaft is fittingly received
in a bore of a body member and is rotatable or slidable
thereto. The annular projections 5f, 5g, 5k in the
first embodiment, and 7d in the second embodiment are
advantageous, particularly when the shaft 2 is rotatably received in the bore 8.

As described heretofore, the end portion secured to
the body member is, according to the invention, formed
to have the inner circumference sealingly contacting
with the shaft, thus, the sealing characteristics of
the dust cover have been very much improved.

1.

CLAIMS

1. A dust cover (5,7) formed of a flexible material for sealing a space between a body member (1) and a shaft (2) which is received fittingly in the body member, one end portion (5a,7a) of said dust cover being sealingly secured to a portion of the shaft projecting out of the body member, and the other end portion (5b,7b) of said dust cover being secured to the body member charactertised in that the inner circumference of said other end portion (5b, 7b) of the dust cover (5,7) which is secured to the body member (1) also sealingly engages with the shaft (2).

2. A dust cover as claimed in claim 1, characterised in that a plurality of axially spaced annular projections (5f, 5i, 5k, 7d) is formed on the inner circumference of said other end portions (5b,7b) of the dust cover (5,7) to sealingly engage with the outer circumference of the shaft (2).

3. A dust cover as claimed in claim 1 or 2, characterised in that the opposite end portions (5a, 5b, 7a, 7b) of the dust cover (5,7) are interconnected by a thin, flexible intermediate portion (5c,7c).

4. A dust cover as claimed in claim 1, 2 or 3 characterised in that the end portion (5a,7a) of the dust cover secured to the shaft is fittingly received and located in an annular groove (2b) formed in the shaft, and the other end portion (5b,7b) secured to the body member (1) abuts normally with the end portion (5a,7a) secured to the shaft and is retained thereby.

*Fig. 1*

*Fig. 2*

## Fig. 3

## Fig. 4

## DOCUMENTS CONSIDERED TO BE RELEVANT

| Category | Citation of document with indication, where appropriate, of relevant passages | Relevant to claim |
|---|---|---|
| X | <u>US - A - 3 490 343</u>  (AFANADOR)<br><br>* Column 1, line 57 - column 4, line 17, figures 1-3<br><br>..... . | 1,3,4 |

**CLASSIFICATION OF THE APPLICATION (Int. Cl. ,**

F-16 J
15/52

**TECHNICAL FIELDS SEARCHED (Int.Cl. )**

F-16 J  15/00

**CATEGORY OF CITED DOCUMENTS**

X: particularly relevant
A: technological background
O: non-written disclosure
P: intermediate document
T tneory or principle underlying the invention
E. conflicting application
D. document cited in the application
L citation for other reasons

&. member of the same patent family, corresponding document

The present search report has been drawn up for all claims

| Place of search | Date of completion of the search | Examiner |
|---|---|---|
| The Hague | 26-03-1980 | LEGER |

EPO Form 1503.1  06.78